# FASCICULE DE BREVET EUROPEEN

(11) **EP 1 108 614 B1**
(45) Date de publication et mention de la délivrance du brevet: **11.02.2004**
(21) Numéro de dépôt: 00403548.1
(22) Date de dépôt: 15.12.2000
(51) Int. Cl.: B60R 7/04, A45C 13/38

(54) **Ensemble de rangement amovible pour véhicule automobile**
Lösbarer Lagerbehälter für ein Automobil
Removable storage assembly for an automotive vehicle

(30) Priorité: 17.12.1999 FR 9915978
(43) Date de publication de la demande: 20.06.2001
(73) Titulaire: Renault V.I., 69800 St Priest (FR)
(72) Inventeur: Ballarin, Paolo, 69230 Saint Genis Laval (FR); Fouet, Michel, 69300 Caluire et Cuire (FR)
(74) Mandataire: Palix, Stéphane

(56) Documents cités:
- DE-A- 19 600 825
- DE-U- 29 704 591
- FR-A- 679 638
- US-A- 2 912 151
- US-A- 3 630 343
- US-A- 4 274 568
- US-A- 4 387 840
- US-A- 5 687 893

## Description

La présente invention est relative à un ensemble de rangement amovible destiné à équiper un véhicule automobile selon le préambule de la revendication 1, voir US-A-2 912 151.

Les habitacles des véhicules particuliers et les cabines de conduite des véhicules industriels sont habituellement équipés d'espaces de rangement répartis dans le volume de la carrosserie. Ces espaces de rangement sont définis une fois pour toutes et destinés à recevoir des bagages qui n'ont en général pas des formes correspondant à celles de ces espaces de rangement. Or, fréquemment, les utilisateurs des véhicules automobiles ont besoin de bagages de petite taille permettant de transporter des objets qui doivent être facilement à leur disposition tant lorsqu'ils se trouvent dans le véhicule que lorsqu'ils sont amenés à en descendre pour exercer des activités diverses à l'extérieur du véhicule. De tels objets peuvent être par exemple des dossiers, un portable, du matériel d'écriture, des pièces de vêtement, un récipient de nourriture etc. Par exemple, les conducteurs de poids-lourds ont à accomplir des formalités lors de diverses activités telles que le chargement, le déchargement, les passages en douane etc, ces activités impliquant l'utilisation par exemple de dossiers et de matériel d'écriture.

Les bagages classiques actuellement disponibles dans le commerce peuvent naturellement loger de tels objets, mais ils sont peu pratiques dans la mesure où, lorsqu'ils sont rangés dans les espaces de rangement classiques d'un véhicule, ils ne sont pas facilement accessibles. De plus, de tels bagages ne sont souvent associés à aucun moyen permettant de les arrimer dans le véhicule pendant les déplacements de celui-ci.

L'invention a pour but de fournir un ensemble de rangement pour véhicule automobile permettant de répondre aux besoins à cet égard des utilisateurs de ces véhicules.

Elle à donc pour objet un ensemble de rangement amovible pour véhicule automobile comprenant en combinaison:
- un cadre de support destiné à être monté sur une partie fixe du véhicule, notamment près du poste de conduite de celui-ci, ce cadre présentant une forme générale en U dont l'âme est destinée à reposer sur ladite partie fixe et dont les deux ailes s'étendent vers le haut, lorsque le cadre de support est en place dans le véhicule, et
- au moins un bagage, caractérisé en ce que le bagage est pourvu de moyens de positionnement qui sont conformés de manière à maintenir le bagage par conjugaison de formes, par rapport à au moins l'une desdites ailes dudit cadre de support.

Grâce à ces caractéristiques, on obtient un ensemble de rangement dont les bagages peuvent facilement être mis en place et enlevés, tout en étant commodément accessibles du poste de conduite du véhicule. En outre, l'ensemble selon l'invention permet un bon ancrage des bagages, même si le véhicule est soumis à de fortes décélérations.

L'ensemble de rangement suivant l'invention peut également présenter les particularités suivantes:
- un premier desdits bagages est dimensionné pour s'insérer entre les ailes dudit cadre de support contre lesquelles il est placé par des faces frontales opposées, lorsqu'il est en place dans le cadre de support, et lesdits moyens de positionnement comportent des organes de maintien en saillie sur chacune de ces faces et distants l'un de l'autre de la largeur d'une aile du cadre de support;
- lesdits organes de maintien comprennent des surfaces concaves de guidage vertical qui sont adaptées aux côtés latéraux de l'aile correspondante du cadre de support et qui sont agencées de telle façon que ledit premier bagage puisse être inséré dans le cadre de support à partir du haut et en être dégagé vers le haut;
- le cadre de support est réalisé à partir de tronçons de tube, et lesdites surfaces de guidage ont une forme concave s'adaptant à la courbure desdits tronçons de tube;
- le cadre de support comprend deux longerons d'où s'étendent verticalement vers le haut à chacune de leurs extrémités des montants dont les extrémités supérieures sont réunies par des traverses respectives;
- lesdits longerons sont réunis par une entretoise;
- des trous de fixation sont prévus dans les longerons et/ou l'entretoise pour la fixation du cadre de support sur une partie fixe du véhicule;
- un second desdits bagages comprend des moyens de positionnement comportant un volet latéral formant soufflet articulé le long de son bord supérieur sur l'une des faces latérales du bagage et destiné à venir coiffer l'une des ailes dudit cadre de support, lorsque ce second bagage est mis en place dans le cadre de support verticalement à partir du haut, ledit second bagage pouvant être dégagé du cadre de support par un déplacement vertical vers le haut;
- un premier desdits bagages comprend trois volumes distincts contigus, le volume intermédiaire étant fait d'une toile souple et les volumes extérieurs étant délimités extérieurement par des coques rigides thermoformées et articulées sur le volume intermédiaire par leur bord inférieur et pouvant être réunis au corps dudit volume intermédiaire par une fermeture à glissière, lesdits organes de maintien pouvant être venus de formage respectivement avec chacune desdites coques;
- au moins l'un desdits bagages est muni de moyens de fixation pour l'immobiliser verticalement dans ledit cadre de support;
- il comprend un récipient isotherme destiné à être rangé dans un compartiment de l'un desdits bagages.

L'invention a également pour objet un véhicule automobile équipé d'un ensemble de rangement présentant l'une ou plusieurs des particularités énoncées ci-dessus, caractérisé en ce que l'ensemble de rangement est monté à côté du poste de conduite de ce véhicule et son cadre de support est disposé de telle façon que les ailes de ce cadre s'étendent transversalement à la direction de progression du véhicule.

D'autres caractéristiques et avantages de l'invention apparaîtront au cours de la description qui va suivre, donnée uniquement à titre d'exemple et faite en se référant aux dessins annexés sur lesquels:
- la figure 1 est une vue schématique en perspective d'un poste de conduite d'un véhicule industriel dans lequel est installé un ensemble de rangement selon l'invention;
- la figure 2 est une vue en perspective agrandie de l'ensemble de rangement, les bagages étant montrés dégagés du cadre de support;
- les figures 3 et 4 sont des vues en perspective des deux bagages de l'ensemble de rangement;
- la figure 5 montre à une échelle agrandie encore davantage, l'un des bagages de l'ensemble, alors que l'un de ses compartiments est ouvert pour y loger un récipient isotherme;
- les figures 6 et 7 sont des vues en coupe schématiques, respectivement en plan et en élévation, de l'un des bagages pour en montrer un aménagement intérieur possible; et
- la figure 8 est une vue en coupe horizontale d'un autre bagage de l'ensemble de rangement pour en montrer un aménagement intérieur.

Suivant le mode de réalisation représenté aux figures, l'ensemble de rangement amovible selon l'invention comprend un cadre de support 1 et des premier et deuxième bagages 2 et 3, ces bagages étant dans le présent exemple respectivement une mallette et un cartable. Cependant, d'autres types de bagages pouvant présenter d'autres formes ou d'autres destinations, rentrent dans le cadre de l'invention.

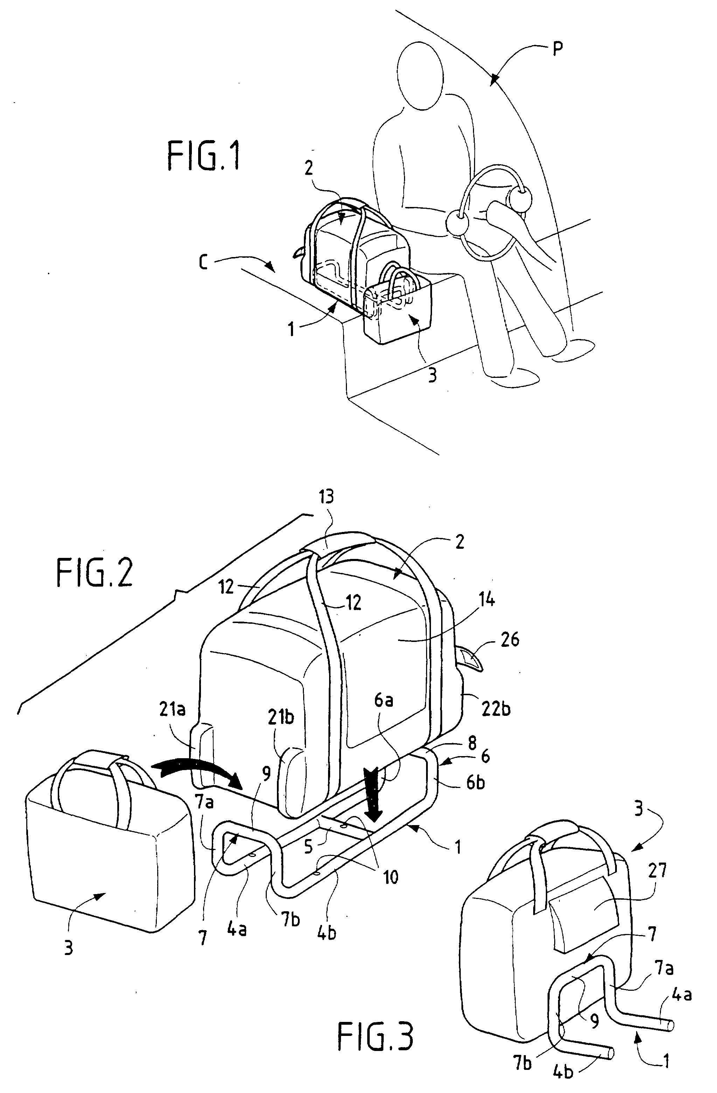

La figure 2 fait apparaître que le cadre de support 1 présente une forme générale de U, réalisé de préférence à partir d'une structure unitaire en tube métallique plié. Ainsi, l'âme du U comporte deux longerons 4a et 4b réunis par une entretoise transversale 5 et les deux ailes 6 et 7 sont constituées chacune par deux montants 6a, 6b, respectivement 7a, 7b réunis par une traverse 8, 9 à leurs extrémités supérieures.

Des trous de fixation 10 sont prévus respectivement dans les longerons 4a et 4b et/ou l'entretoise 5. Ils sont destinés à recevoir des vis de fixation (non représentées) à l'aide desquelles le cadre 1 peut être monté sur une partie fixe d'un habitacle de véhicule automobile particulier ou, comme représenté, d'une cabine de véhicule industriel et plus précisément du capot moteur intérieur C à côté du poste de conduite P de ce véhicule. On notera que le cadre 1 est fixé sur le véhicule de telle façon que ses ailes montantes 6 et 7 s'étendent transversalement à la direction de progression du véhicule.

Il est à noter également que la structure du cadre 1 telle que représentée n'est pas la seule possible pour la mise en oeuvre de l'invention. Ce qui est essentiel, c'est que le cadre 1 comprenne une partie de fixation et deux ailes montantes, un tel cadre pouvant donc être réalisé par exemple à partir de composants réunis ensemble par tout moyen approprié tel que le vissage ou le soudage par exemple.

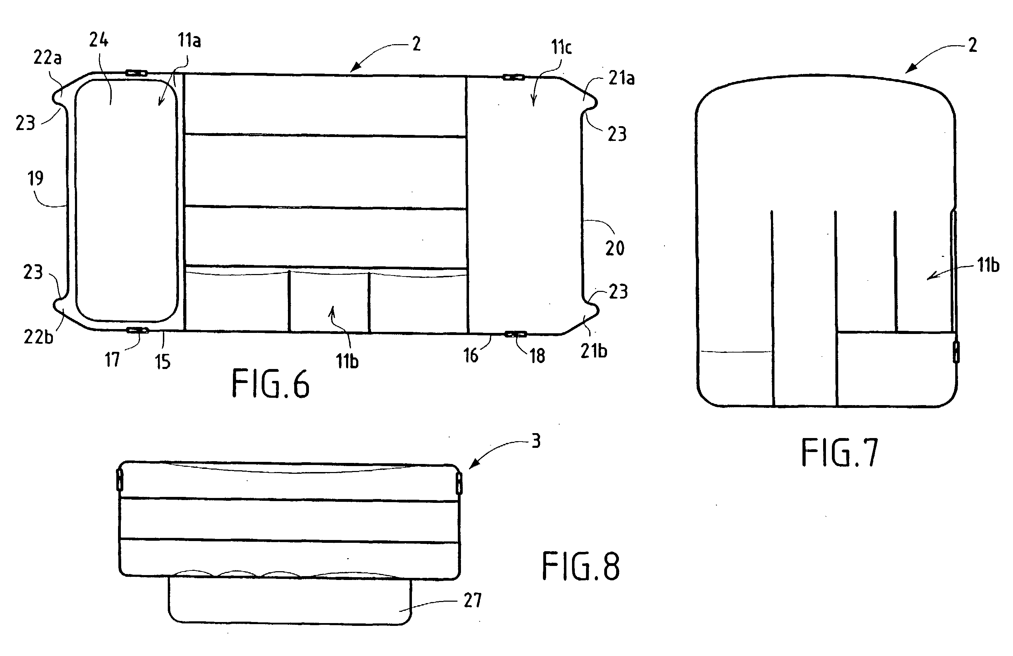

Un exemple préféré de mallette 2 est représenté plus en détail sur les figures 2, 3, 5, 6 et 7. Elle présente trois volumes principaux de rangement contigus 11a, 11b et 11c (figure 6). Le volume intermédiaire 11b peut être délimité par une toile, usuelle pour la confection de bagages souples. De façon bien connue, ce volume est muni d'anses 12 pourvues d'une poignée 13 à bande auto-agrippante. Un rabat 14 est articulé par l'un de ses côtés situé sur le dessus à un bord d'une ouverture (non dessinée) du volume 11b, et par ses autres côtés aux autres bords de cette ouverture par l'intermédiaire d'une fermeture à glissière également non dessinée.

La toile qui délimite le volume 11b se prolonge de chaque côté par un rebord 15, 16 se terminant par l'une des parties d'une fermeture à glissière 17, 18 (figure 6), qui suit ce rebord, sauf le long de sa partie située au fond de la mallette 2. C'est le long de cette partie de fond de chaque rebord 15, 16 qu'est articulée une coque rigide 19, 20, pourvue de la partie complémentaire de la fermeture à glissière 17 ou 18. Ces coques sont réalisées de préférence en une matière thermoformée Ainsi, chaque paroi frontale du volume intermédiaire 11b délimite respectivement avec un rebord 15, 16 et une coque 19, 20, le volume 11a ou 11c de la mallette 2.

Sur la face extérieure frontale de chaque coque 19, 20 sont prévus deux organes de maintien 21a, 21b et 22a, 22b qui sont destinés à positionner latéralement la mallette 2 par rapport au cadre de support 1 par conjugaison de formes. Ces organes de maintien 21a, 21b et 22a, 22b sont prévus en saillie sur les faces frontales des coques respectives 19 et 20 avec lesquelles ils sont de préférence venus de thermoformage. Ils sont écartés l'un de l'autre de la largeur d'une aile 6, 7 du cadre de support 1 et s'adaptent au cadre de support 1 par conjugaison de formes en ce sens notamment qu'ils présentent, côté intérieur, une surface de guidage vertical 23 à forme arrondie concave se raccordant sur la face frontale de la coque 19, 20 et de même courbure que celle du ou des tubes dont est fait ce cadre de support 1. Comme par ailleurs, l'écartement des faces frontales des coques 19 et 20 est égal à la distance entre les ailes 6 et 7, on conçoit que la mallette 2 peut s'insérer très facilement à partir du haut dans le cadre de support 1 pour y être bloquée fermement dans un plan horizontal ou en être enlevée aussi facilement en la dégageant vers le haut. Si, de plus, le cadre de support 1 est fixé dans le véhicule de manière à s'étendre comme indiqué sur la figure 1, un glissement horizontal de la mallette 2 est interdit même en cas de forte décélération du véhicule, lorsque cette mallette est en place dans le cadre de support 1.

Bien entendu, les moyens de positionnement agissant par conjugaison de formes peuvent être réalisés différemment, comme le comprendra l'homme de l'art.

La figure 5 montre que les volumes de rangement 11a et 11c sont facilement accessibles. Avantageusement, on peut prévoir d'y loger, de préférence de façon ajustée, un récipient isotherme étanche 24, par exemple pour conserver une boisson ou d'autres types de denrées.

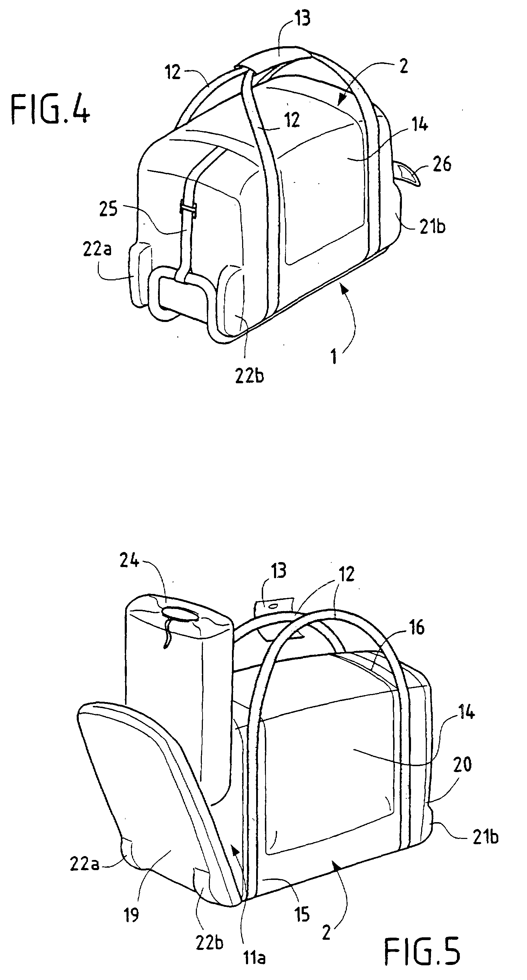

L'ensemble de rangement peut en outre comprendre des moyens de fixation pour immobiliser verticalement la mallette 2 dans le cadre de support 1. Dans l'exemple représenté, ces moyens de fixation comprennent, soit une sangle 25 (figure 4) en deux parties réunies par un clips et fixées respectivement sur la traverse 8 ou 9 du cadre de support 1 et sur la mallette 2, soit un volet 26 muni d'une bande auto-agrippante venant se placer autour d'une traverse 8 ou 9. Dans l'exemple représenté, on prévoit une telle sangle 25 d'un côté et un tel volet 26 de l'autre,

Les figures 6 et 7 montrent l'une des nombreuses possibilités d'aménagement intérieur du volume intermédiaire 11b. On peut y prévoir des compartiments divers pour loger des dossiers, des pièces de vêtement, un nécessaire d'écriture etc., ces compartiments étant délimités par des cloisons amovibles ou fixes.

Le cartable 3 représenté à titre d'exemple en particulier sur les figures 2, 3 et 4, revêt la forme d'un sac classique en toile par exemple. Sa particularité consiste en ce qu'il comprend sur l'une de ses faces extérieures un soufflet 27 articulé sur le cartable 3 par son bord supérieur. De la sorte, pour accrocher le cartable 3 au cadre de support 1, il suffit de coiffer l'aile 6 ou 7 du cadre de support 1 avec le volet 27. Dans ce cas, ce cartable 3 est donc rendu solidaire de ce cadre de support 1 par conjugaison de formes en ce sens que le volet 27 est adapté à la forme d'une aile 6 ou 7 du cadre de support 1 pour assurer le positionnement du cartable par rapport à ce dernier. L'aménagement du cartable 3 peut être quelconque, par exemple celui représenté sur la figure 8. Bien entendu, lorsque la mallette 2 et le cartable 3 sont tous deux placés sur le cadre de support, la sangle 25 ou selon l'orientation de la mallette 2 par rapport au cadre de support 1, le volet 27 doit être dégagé de ce dernier, selon que le cartable est accroché d'un côté ou de l'autre de la mallette 2.

## Revendications

1. Ensemble de rangement amovible pour véhicule automobile comprenant en combinaison:
- un cadre de support (1) destiné à être monté sur une partie fixe (C) du véhicule, notamment près du poste de conduite (P) de celui-ci, ce cadre présentant une forme générale en U dont l'âme (4a, 4b) est destinée à reposer sur ladite partie fixe (C) et dont les deux ailes (6, 7) s'étendent vers le haut, lorsque le cadre de support est en place dans le véhicule, et
- au moins un bagage (2; 3), **caractérisé en ce que** le bagage (2, 3) est pourvu de moyens de positionnement (21a, 21b, 22a, 22b; 27) qui sont conformés de manière à maintenir le bagage sur le cadre de support par conjugaison de formes, par rapport à au moins l'une desdites ailes (6, 7) dudit cadre de support (1), tout en permettant un dégagement vers le haut dudit bagage (2, 3) par rapport audit cadre.

2. Ensemble de rangement suivant la revendication 1, **caractérisé en ce qu'**un premier (2) desdits bagages est dimensionné pour s'insérer entre les ailes (6, 7) dudit cadre de support (1) contre lesquelles il est placé par des faces frontales opposées, lorsqu'il est en place dans le cadre de support, et lesdits moyens de positionnement comportent des organes de maintien (21a, 21b, 22a, 22b) en saillie sur chacune de ces faces et distants l'un de l'autre de la largeur d'une aile (6, 7) du cadre de support (1).

3. Ensemble de rangement suivant la revendication 2, **caractérisé en ce que** lesdits organes de maintien (21a, 21b, 22a, 22b) comprennent des surfaces concaves de guidage vertical (23) qui sont adaptées aux côtés latéraux de l'aile correspondante (6, 7) du cadre de support (1) et qui sont agencées de telle façon que ledit premier bagage (2) puisse être inséré dans le cadre de support (1) à partir du haut et en être dégagé vers le haut.

4. Ensemble de rangement suivant la revendication 3, **caractérisé en ce que** le cadre de support (1) est réalisé à partir de tronçons de tube, et lesdites surfaces de guidage (23) ont une forme concave s'adaptant à la courbure desdits tronçons de tube.

5. Ensemble de rangement suivant l'une quelconque des revendications 1 à 4, **caractérisé en ce que** le cadre de support (1) comprend deux longerons (4a, 4b) d'où s'étendent verticalement vers le haut à chacune de leurs extrémités des montants (6a, 6b, 7a, 7b) dont les extrémités supérieures sont réunies par des traverses respectives (8, 9).

6. Ensemble de rangement suivant la revendication 5, **caractérisé en ce que** lesdits longerons (4a, 4b) sont réunis par une entretoise (5).

7. Ensemble de rangement suivant la revendication 6, **caractérisé en ce que** des trous de fixation (10) sont prévus dans les longerons (4a, 4b) et/ou l'entretoise (5) pour la fixation du cadre de support (1) sur ladite partie fixe (C) du véhicule.

8. Ensemble de rangement suivant l'une quelconque des revendications 1 à 7, **caractérisé en ce qu'**un second desdits bagages (3) comprend des moyens de positionnement comportant un volet latéral formant soufflet (27) articulé le long de son bord supérieur sur l'une des faces latérales du bagage et destiné à venir coiffer l'une des ailes (6, 7) dudit cadre de support (1), lorsque ce second bagage (3) est mis en place dans le cadre de support (1) verticalement à partir du haut, ledit second bagage (3) pouvant être dégagé du cadre de support (1) par un déplacement vertical vers le haut.

9. Ensemble de rangement suivant l'une quelconque des revendications 1 à 8, **caractérisé en ce qu'**un desdits premier bagages (2) comprend trois volumes distincts contigus (11a, 11b, 11c), le volume intermédiaire (11b) étant fait d'une toile souple et les volumes extérieurs (11a, 11c) étant délimités extérieurement par des coques rigides (19, 20) en matière thermoformée et articulées sur le volume intermédiaire (11b) par leur bord inférieur et pouvant être réunis au corps dudit volume intermédiaire (11b) par une fermeture à glissière (17, 18).

10. Ensemble de rangement suivant la revendication 9, lorsqu'elle dépend de l'une quelconque des revendications 2 à 8, **caractérisé en ce que** lesdits organes de maintien (21a, 21b, 22a, 22b) sont venus de formage respectivement avec chacune desdites coques (19, 20).

11. Ensemble de rangement suivant l'une quelconque des revendications précédentes, **caractérisé en ce qu'**au moins l'un des bagages (2, 3) est muni de moyens de fixation (25, 26) pour l'immobiliser verticalement dans ledit cadre de support (1).

12. Ensemble de rangement suivant l'une quelconque des revendications précédentes, **caractérisé en ce qu'**il comprend un récipient isotherme (24) destiné à être rangé dans un compartiment (11a) de l'un desdits bagages (2).

13. Véhicule automobile équipé d'un ensemble de rangement selon l'une quelconque des revendications 1 à 12 **caractérisé en ce que** l'ensemble de rangement est monté à côté du poste de conduite (P) de ce véhicule et **en ce que** son cadre de support (1) est disposé de telle façon que les ailes (6, 7) de ce cadre s'étendent transversalement à la direction de progression du véhicule.

## Claims

1. Removable storage assembly for an automotive vehicle comprising, in combination:
- a support frame (1) intended to be mounted on a fixed part (C) of the vehicle, especially near the driving seat (P) thereof, this frame having the overall shape of a U the web (4a, 4b) of which is intended to rest on the said fixed part (C) and the two flanges (6, 7) of which extend upwards, when the support frame is in place in the vehicle, and
- at least one item of luggage (2; 3), **characterized in that** the item of luggage (2; 3) is provided with positioning means (21a, 21b, 22a, 22b; 27) which are shaped in such a way as to hold the item of luggage on the support frame through mating shapes, with respect to at least one of the said flanges (6, 7) of the said support frame (1) while at the same time allowing the said item of luggage (2, 3) to be disengaged upwards with respect to the said frame.

2. Storage assembly according to Claim 1, **characterised in that** a first (2) of the said items of luggage is sized to fit between the flanges (6, 7) of the said support frame (1) against which it is placed via opposed transverse faces, when it is in place in the support frame, and the said positioning means comprise holding members (21a, 21b, 22a, 22b) projecting from each of these faces and distant from one another by the width of a flange (6, 7) of the support frame (1).

3. Storage assembly according to Claim 2, **characterised in that** the said holding members (21a, 21b, 22a, 22b) comprise concave vertical guide surfaces (23) which are tailored to the lateral sides of the corresponding flange (6, 7) of the support frame (1) and arranged in such a way that the said first item of luggage (2) can be inserted into the support frame (1) from above and disengage therefrom upwards.

4. Storage assembly according to Claim 3, **characterised in that** the support frame (1) is made from lengths of tube, and the said guide surfaces (23) have a concave shape matching the curvature of the said lengths of tube.

5. Storage assembly according to any one of Claims 1 to 4, **characterised in that** the support frame (1) comprises two longitudinal members (4a, 4b) from each of the ends of which there extend vertically upwards uprights (6a, 6b, 7a, 7b) the top ends of which are connected by respective cross members (8, 9).

6. Storage assembly according to Claim 5, **characterised in that** the said longitudinal members (4a, 4b) are connected by a spacer piece (5).

7. Storage assembly according to Claim 6, **characterised in that** fixing holes (10) are provided in the longitudinal members (4a, 4b) and/or the spacer piece (5) for fixing the support frame (1) to the said fixed part (C) of the vehicle.

8. Storage assembly according to any one of Claims 1 to 7, **characterised in that** a second of the said items of luggage (3) comprises positioning means comprising a lateral flap forming a gusset (27) articulated along its upper edge along one of the lateral faces of the item of luggage and intended to fit over one of the flanges (6, 7) of the said support frame (1) when this second item of luggage (3) is placed in the support frame (1) vertically from above, the said second item of luggage (3) being able to be disengaged from the support frame (1) by moving it vertically upwards.

9. Storage assembly according to any one of Claims 1 to 8, **characterised in that** one of the said first items of luggage (2) comprises three contiguous separate volumes (11a, 11b, 11c), the intermediate volume (11b) being made of a flexible material and the outer volumes (11a, 11c) being externally limited by rigid shells (19, 20) made of a thermoformed material and articulated to the intermediate volume (11b) by their lower edge and able to be connected to the body of the said intermediate volume (11b) by a zip fastener (17, 18).

10. Storage assembly according to Claim 9, when dependent on any one of Claims 2 to 8, **characterised in that** the said holding members (21a, 21b, 22a, 22b) are formed as an integral part of each of the said shells (19, 20) respectively.

11. Storage assembly according to any one of the preceding claims, **characterised in that** at least one of the items of luggage (2, 3) is equipped with fixing means (25, 26) for vertically immobilising it in the said support frame (1).

12. Storage assembly according to any one of the preceding claims, **characterised in that** it comprises an isothermal container (24) intended to be stored in one compartment (11a) of one of the said items of luggage (2).

13. Motor vehicle equipped with a storage assembly according to any one of Claims 1 to 12, **characterised in that** the storage assembly is mounted beside the driving seat (P) of this vehicle and **in that** its support frame (1) is arranged in such a way that the flanges (6, 7) of this frame run transversely to the direction of travel of the vehicle.

## Patentansprüche

1. Lösbarer Lagerbehälter für ein Automobil bestehend aus, in Kombination:
- einem Halterahmen (1) zur Befestigung an einem feststehenden Teil (C) des Automobils, insbesondere in der Nähe seines Fahrersitzes (P), wobei der Rahmen die allgemeine Form eines U aufweist, dessen Steg (4a, 4b) sich auf dem feststehenden Teil (C) abstützt, und dessen zwei Bügel (6, 7) nach oben erstrecken, wenn der Halterahmen im Fahrzeug eingesetzt ist und
- wenigstens einem Gepäckteil (2, 3) **dadurch gekennzeichnet, dass** das Gepäckteil (2, 3) mit einer Positionieranordnung (21a, 21b, 22a, 22b, 27) versehen ist, die derart ausgestaltet ist, dass das Gepäckteil am Halterahmen durch Zusammenwirkung der Formen bezüglich mindestens einen der Bügel (6, 7) des Halterahmens (1) gehalten wird und dabei ein Herausnehmen des Gepäckteils (2, 3) aus dem Rahmen nach oben ermöglicht.

2. Lagerbehälter nach Anspruch 1, **dadurch gekennzeichnet, dass** ein erstes (2) der Gepäckteile derart dimensioniert ist, dass es zwischen die Bügel (6, 7) des Halterahmens (1) einsetzbar ist, an denen es sich mit seinen sich gegenüberliegenden Stirnseiten abstützt, wenn es in den Halterahmen eingesetzt ist, wobei die Positionieranordnung Halteteile (21a, 21b, 22a, 22b) aufweist, die von diesen Seiten hervorspringen und einen Abstand voneinander aufweisen, der der Breite eines Bügels (6, 7) des Halterahmens (1) entspricht.

3. Lagerbehälter nach Anspruch 2, **dadurch gekennzeichnet, dass** die Halteteile (21a, 21b, 22a, 22b) konkave Oberflächen (23) für die senkrechte Führung aufweisen, die an die Seiten des zugehörigen Bügels (6, 7) des Halterahmens (1a) angepasst sind und die derart ausgestaltet sind, dass das erste Gepäckteil (2) von oben in den Halterahmen (1) einsetzbar und nach oben herausnehmbar ist.

4. Lagerbehälter nach Anspruch 3, **dadurch gekennzeichnet, dass** der Halterahmen (1) aus Rohrabschnitten hergestellt ist und dass die Führungsflächen (23) eine konkave Form aufweisen, die an die Krümmung der Rohrabschnitte angepasst ist.

5. Lagerbehälter nach einem der Ansprüche 1 bis 4, **dadurch gekennzeichnet, dass** der Halterahmen (1) zwei Längsholme (4a, 4b) aufweist, von dem aus sich senkrecht nach oben an jedem ihrer Enden Stützen (6a, 6b, 7a, 7b) erstrecken, deren obere Enden durch entsprechende Querstreben (8, 9) miteinander verbunden sind.

6. Lagerbehälter nach Anspruch 5, **dadurch gekennzeichnet, dass** die Längsholme (4a, 4b) über eine Querstrebe (5) miteinander verbunden sind.

7. Lagerbehälter nach Anspruch 6, **dadurch gekennzeichnet, dass** Befestigungsöffnungen (10) in den Längsholmen (4a, 4b) und/oder der Querstrebe (5) ausgebildet sind für die Befestigung des Halterahmens (1) am feststehenden Teil (C) des Automobils.

8. Lagerbehälter nach einem der Ansprüche 1 bis 7, **dadurch gekennzeichnet, dass** ein zweites Gepäckteil (3) eine Positionieranordnung aufweist, die mit einer seitlichen als Balg (27) ausgebildeten Klappe versehen ist, welche entlang ihres oberen Randes an einer der Seiten des Gepäckteils angelenkt ist und die dazu dient, einen der Bügel (6, 7) des Halterahmens (1) abzudecken, wenn das zweite Gepäckteil (3) in den Halterahmen (1) senkrecht von oben eingesetzt worden ist, wobei das zweite Gepäckteil (3) aus dem Halterahmen (1) durch eine senkrecht nach oben gerichtete Verschiebung herausnehmbar ist.

9. Lagerbehälter nach einem der Ansprüche 1 bis 8, **dadurch gekennzeichnet, dass** eines der genannten Gepäckteile (2) drei aneinander grenzende, voneinander getrennte Fächer (11a, 11b, 11c) aufweist, wobei das mittlere Fach (11b) aus einem weichen Stoff besteht und die Außenfächer (11a, 11c) nach außen durch steife Schalen (19, 20) aus einem thermisch verformbaren Material begrenzt sind und am mittleren Fach (11b) über ihre unteren Ränder angelenkt sind, wobei sie mit dem Körper des mittleren Faches (11b) über einen Reißverschluss (17, 18) verbunden sind.

10. Lagerbehälter nach Anspruch 9, wenn dieser von einem der Ansprüche 2 bis 8 abhängt, **dadurch gekennzeichnet, dass** die Halteteile (21a, 21b, 22a, 22b) gemeinsam mit den beiden Schalen (19, 20) durch eine Formgebung hergestellt sind.

11. Lageranordnung nach einem der vorhergehenden Ansprüche, **dadurch gekennzeichnet, dass** wenigstens eines der Gepäckteile (2, 3) mit einer Befestigungsanordnung (25, 26) versehen ist, um es in senkrechter Richtung im Halterahmen (1) festzustellen.

12. Lagerbehälter nach einem der vorhergehenden Ansprüche, **dadurch gekennzeichnet, dass** er einen thermisch isolierten Behälter (24) aufweist, der in eines der Fächer (11a) des Gepäckteils (2) einsetzbar ist.

13. Automobil mit einem Lagerbehälter nach einem der Ansprüche 1 bis 12, **dadurch gekennzeichnet, dass** der Lagerbehälter neben dem Fahrersitz (P) dieses Automobils angeordnet ist und dass sein Halterahmen (1) derart angeordnet ist, dass die Bügel (6, 7) des Rahmens sich quer zur Fahrtrichtung des Automobils erstrecken.
